**Europäisches Patentamt**

**European Patent Office**

**Office européen des brevets**

(19)

(11) Veröffentlichungsnummer: **0 119 464**
**B1**

(12) # EUROPÄISCHE PATENTSCHRIFT

(45) Veröffentlichungstag der Patentschrift:
15.11.89

(21) Anmeldenummer: **84101512.6**

(22) Anmeldetag: **14.02.84**

(51) Int. Cl.⁴: **B 44 D 3/18,** C 09 K 3/16,
C 08 J 7/04

(54) **Zeichenmaterial.**

(30) Priorität: **23.02.83 DE 3306191**

(43) Veröffentlichungstag der Anmeldung:
**26.09.84 Patentblatt 84/39**

(45) Bekanntmachung des Hinweises auf die Patenterteilung:
**15.11.89 Patentblatt 89/46**

(84) Benannte Vertragsstaaten:
**AT BE CH DE FR GB IT LI NL SE**

(56) Entgegenhaltungen:
**EP-A-0 067 688**
**DE-A-2 347 324**
**DE-A-2 417 879**
**DE-A-2 513 422**
**DE-C-1 228 026**
**DE-C-2 139 538**
**US-A-3 382 096**

(73) Patentinhaber: **HOECHST AKTIENGESELLSCHAFT,
Postfach 80 03 20, D-6230 Frankfurt am Main 80
(DE)**

(72) Erfinder: **Thoese, Klaus, Dr., Erbsenacker 15,
D-6200 Wiesbaden (DE)**

LIBER, STOCKHOLM 1989

## Beschreibung

Die vorliegende Erfindung betrifft ein Zeichenmaterial, bestehend aus einem Kunststoffträger, der wenigstens auf einer Oberfläche mit einer Haftschicht, einer Pigmentlack- oder Klarlackschicht und einer antistatisch ausgerüsteten Deckschicht versehen ist, die ein Copolymerisat mit mindestens 90 Gewichtsprozent Vinylacetat enthält.

Zeichenmaterial, wie zum Beispiel eine Seichenfolie, wird in der Regel aus einem Kunststoffträger aus Celluloseacetat, Polyvinylchlorid, Polypropylen, vorzugsweise aus Polyester, insbesondere aus Polyethylenterephthalat, hergestellt, der auf mindestens einer Oberfläche mit einer Haftschicht versehen ist. Man beschichtet vorzugsweise mit einem Pigmentlacksystem, damit eine mit Bleistiftminen und Tusche beschrift- oder beschreibbare Oberfläche entsteht. Das Material kann auch so ausgerüstet sein, daß man auf die Pigmentlackschicht eine gesonderte Deckschicht aufbringt, um Tuschehaftung zu erzielen. Im Falle, daß man nur mit Tuschen zeichnen will, kann an stelle des Pigmentlackes ein Klarlack verwendet werden oder ein antistatischer Deckstrich direkt auf die Haftschicht aufgetragen werden.

Es ist ein beschriftbares Folienmaterial bekannt (DE-OS-2 417 879 entsprechend GB-PS-1 448 889), das auf einer Pigmentlackschicht eine Oberschicht enthält, die aus einem Homopolymerisat des Vinylacetats, einer polymeren Verbindung, die hauptsächlich Hydroxyl- oder Carboxylgruppen enthaltende Monomere enthält, und aus einem Hydrophobierungsmittel besteht. Eine solche Deckschicht hat sich als wasser- bzw. feuchtigkeitsempfindlich erwiesen. Bei großem Anteil an Hydrophobierungsmittel wird außerdem das Netzen wäßriger Zeichentuschen unbefriedigend. Schließlich fehlt diesem Folienmaterial eine antistatische Ausrüstung.

Es ist ferner ein mattes, Beschriftungen annehmendes Folienmaterial bekannt (DE-OS-2 347 324 entsprechend US-PS-3 857 729), das auf einem Polyesterträger mit einer Schicht aus filmbildendem Celluloselack versehen ist und eine Außenschicht als antistatischen Überzug enthält. Als Antistatika werden wasserlösliche, relativ kompliziert aufgebaute Verbindungen aus sulfoniertem Polystyrol und einem cycloaliphatischen Aminsalz eines Alkoholsulfats verwendet. Nachteilig an einem solchen Überzug ist, daß er empfindlich gegen Luftfeuchtigkeit ist und mit Wasser jederzeit von der Oberfläche abgelöst werden kann.

Es ist auch eine beschichtete Kunststoffolie wie Polyesterfolie bekannt (DE-OS-2 513 422 entsprechend GB-PS-1 497 657), die gegebenenfalls auf einer Substratschicht aus Acryl- bzw. Methacrylsäure-Mischpolymerisat mit einer Schicht versehen ist, die aus einem nicht hydrolysierten oder partiell hydrolysierten Polymer oder Copolymer des Vinylacetats und einer harzartigen Komponente, die zur intramolekularen Vernetzung geeignet ist, besteht. Das Copolymerisat des Vinylacetats weist 50 und mehr Molprozent Vinylacetat auf und kann als Comonomer die verschiedensten Verbindungen wie Dialkylmaleat, 2-Ethyl-hexylacrylat, Ethylen, Vinylchlorid oder einen Vinylester versatischer Säure enthalten. Eine solcher Art beschichtete Folie soll auch für die Herstellung von Zeichenfolien geeignet sein, wenn man ihr entsprechende Zusätze einverleibt. Zusammensetzungen sind jedoch nicht angegeben. Durch den Einbau feinverteilter Mattierungsmittel ist zwar eine gewisse Beschreibbarkeit mit Bleistiftminen zu erwarten, Zusätze geeigneter Art für Tinte- oder Tuschebeschriftungen erfordern jedoch erheblichen experimentellen Aufwand in bezug auf Verträglichkeit und Abstimmung der Substanzen untereinander und in bezug auf geforderte Eigenschaften wie Netzfähigkeit der Tuschen auf der Oberfläche in geeigneter Weise, Haftfähigkeit auf der Oberfläche und Korrigierbarkeit der Zeichen usw. Das gilt erst recht bei einem eventuellen Zusatz von Antistatika, die erfahrungsgemäß die Beschreibbarkeit mit Tuschen verschlechtern, was so weit gehen kann, daß sie nicht mehr netzen.

In der deutschen Patentschrift DE-PS-3 207 122 wird eine Zeichenfolie beschrieben, die ein Pigmentlacksystem aus einem Acryl- bzw. Methacrylsäureester-Mischpolymerisat, das zu wenigstens 50 Gewichtsprozent aus einem Estermonomer gebildet wird, dessen Alkoholkomponente eine Kettenlänge von mindestens vier Kohlenstoffatomen besitzt, enthält, dem man ein Antistatikum aus der Reihe der Salze von polymeren Sulfonsäuren zufügt. Bei relativ guter Beschriftbarkeit mit Tuschen - die Ränder der Tuschelinien sind noch nicht scharf genug - ist aber die antistatische Ausrüstung, insbesondere wenn sie als Deckstrich vorliegt, gegenüber der Einwirkung von Wasser nicht ausreichend widerstandsfähig.

Es war deshalb Aufgabe der vorliegenden Erfindung, eine mit Bleistift und wäßriger Tinte oder Tusche beschriftbare, eine hohe Beständigkeit aufweisende Zeichenfolie zu schaffen, auf der Linien aus Tinte oder Tusche randscharf und flächendeckend sind und auf der die bei der Beschriftung mit Röhrchenfedern vorgelegten Soll-Linienbreiten eingehalten werden. Korrekturen auf der Oberfläche sollten ohne Zurückbleiben von Geisterbildern durchgeführt werden können und die Haftung der Schichten wie auch die Haftung der aufgebrachten Zeichen sollte hohen Ansprüchen genügen. Es war auch Aufgabe der Erfindung, die Zeichenfolie besonders wasserfest antistatisch auszurüsten, ohne daß hierdurch eine gute Netzfähigkeit der Tuschen verschlechtert wird und ohne daß die notwendige Resistenz der Zeichenfolie gegen mechanischen Angriff und erhöhte Temperatur nachteilig beeinflußt wird.

Die Lösung dieser Aufgabe geht aus von einem Zeichenmaterial der eingangs genannten Art, dessen Deckschicht als Antistatikum ein Polyamid-Epihalogenhydrin-Harz enthält. Vorzugsweise enthält die Deckschicht ein Polyamid-Epichlorhydrin-Harz aus einem Kondensationsprodukt aus mindestens einer langkettigen, aliphatischen, gesättigten Dicarbonsäure und mindestens einem Polyamin, das anschließend mit Epichlorhydrin modifiziert wurde.

Hierdurch wird erreicht, daß erfindungsgemäß eine Folie mit Zeichenschicht zur Verfügung gestellt werden kann, die höchsten Ansprüchen genügt. Der Verbund zwischen der maßstabilen Kunststoffolie und dem

2

Pigmentlacksystem ist hervorragend. Die Beschreibbarkeit mit Graphit- oder Kunststoffminen und ihre Korrigierbarkeit sind gut. Die mechanische Festigkeit, die thermische Beständigkeit und die Beständigkeit gegen Feuchte, besonders auch gegen Wassereinwirkung, entspricht den Forderungen an eine gute Zeichenfolie. Die Beschreibbarkeit mit wäßrigen Zeichentuschen ist so gut, daß die Striche randscharf sind und voll decken, d.h. die Tuschenetzung ist zufriedenstellend. Die Strichlinienbreite ist bei der Beschriftung mit Röhrchenfedern der vorgegebenen Breite entsprechend. Ferner sind die Tuschelinien leicht zu korrigieren, und es bleiben keine Geisterbilder zurück. Die Zeichenoberfläche lädt sich beim Hantieren nicht auf, d.h. Formate können leicht entstapelt werden. Radierreste bleiben nicht haften, und die Staubanziehung ist deutlich verringert. Selbst nach Einwirkung von Wasser auf die bezeichnete Folie bleibt die antistatische Wirkung erhalten. Die Folie ist zum Beispiel auch ausgezeichnet mit in der Elektrophotographie üblichen Entwicklern zu bebildern.

Die für den Deckstrich erfindungsgemäß verwendeten Polyamid-Epihalogenhydrin-Harze sind bekannt. Sie werden als Leimungsmittel für Papier eingesetzt und erhöhen dessen Naßfestigkeit, wie dies aus DE-AS-1 906 450 (entsprechend GB-PS-1 269 381), DE-AS-1 177 824 (entsprechend GB-PS-865 727), DE-OS-2 949 870 (entsprechend GB-PS-31 000 899) und DE-AS-1 771 243 (entsprechend GB-PS-1 388 954) hervorgeht. Es handelt sich in der Regel um Produkte, die kein freies Epihalogenhydrin mehr enthalten. Die Verwendung der Harze ist auch bekannt als Verankerungsmittel mit verminderter Durchlässigkeit von Wasserdampf und Sauerstoff für beschichtete Wursthüllen aus DE-AS-2 162 204 (entsprechend GB-PS-1 417 419). Ebenso sind sie als Haftvermittler-Bestandteile für photographische Filme bekannt geworden (DE-AS-2 139 538, entsprechend GB-PS-1 339 317).

Diese mit Epihalogenhydrin modifizierten Aminogruppen enthaltenden Polyamid-Harze sind danach geeignet zur Verfestigung und Verbindung unter Ausnutzung ihrer Vernetzungsfähigkeit. Es war völlig überraschend, daß diese Verbindungen erfindungsgemäß als gut wirkende Antistatika eingesetzt werden konnten und zum Beispiel in Kombinationen zu Oberflächen mit guter Beschreibbarkeit für wäßrige Tuschen mit scharfen Tuschelinienrändern führten.

Die im Handel erhältlichen Polyamid-Epihaloghydrin-Harze gewinnt man durch Kondensation von zum Beispiel Epichlorhydrin, mit einem Aminogruppen enthaltenden Polyamid. Als Polyamine kommen einfache Alkylendiamine in Betracht oder Polyalkylenpolyamine, wie Diethylentriamin, Triethylentetramin, Tetraethylenpentamin und die entsprechenden Polypropylenpolyamine. Die Polyamide sind Kondensationsprodukte einer gesättigten, aliphatischen, zweibasischen Säure, die eine Alkylkette von mindestens 3 Kohlenstoffatomen aufweist mit einem der obengenannten Polyamine. Vorzugsweise wird ein Polyamid-Epichlorhydrin-Harz eingesetzt, das aus einem Kondensationsprodukt aus einer Dicarbonsäure mit mindestens 10 Kohlenstoffatomen und Alkylendi- bzw. -triamin erhalten wurde. Es können auch Gemische eingesetzt werden, soweit das hergestellte Polyamid-Epihalogenhydrin-Harz in Wasser echt löslich oder zumindest kolloidal löslich ist.

Insbesondere sind solche Polyamid-Epichlorhydrin-Harze geeignet, die unter Verwendung polymerer Carbonsäuren mit mindestens 18 Kohlenstoffatomen hergestellt worden sind und die die basische Komponente in stöchiometrischem Überschuß zu den vorhandenen Carboxylgruppen enthalten. Sie werden durch Erhitzen der Carbonsäuren mit Polyaminen hergestellt und sind Carbonsäureamidamine. Die polymeren Carbonsäuren erhält man zum Beispiel aus der Dimerisierung ungesättigter Fettsäuren, die in technischen Ölen vorkommen. Als Polyamine kommen hier Ethylendiamin, Diethylentriamin, Propylendiamin, Dipropylentriamin und deren höhermolekulare Homologe, wie etwa Hexamethylendiamin sowie deren Gemische in Betracht.

In dem für die Deckschicht neben dem Polyamid-Epihalogenhydrin-Harz eingesetzten Copolymerisat sind mindestens 90 Gewichtsprozent Vinylacetat und höchstens 10 Gewichtsprozent ungesättigter Carbonsäuren vorhanden. Als Comonomere dienen beispielsweise Säuren wie Maleinsäure oder Maleinsäureanhydrid, Citraconsäure, Itaconsäure oder auch Crotonsäure. Copolymerisate, die 95 Gewichtsprozent Vinylacetat enthalten, werden vorzugsweise verwendet.

Im Falle der bevorzugten Ausführungsform enthält die Deckschicht ein Copolymerisat aus mindestens 90 Gewichtsprozent Vinylacetat und höchstens 10 Gewichtsprozent Crotonsäure in Kombination mit einem wasserlöslichen Polyamid-Epihalogenhydrin-Harz.

Die Dicke der Deckschicht beträgt, auf das Schichtgewicht bezogen, 0,01 bis 1,0 g/m². Das Mischungsverhältnis von Polyamid-Epihalogenhydrin-Harz zu Copolymerisat kann im Bereich zwischen 30 bis 60 zu 70 bis 40 Gewichtsprozent, bezogen auf die Trockenmasse, schwanken. Die Deckschicht enthält vorzugsweise 30 bis 40 Gewichtsprozent, bezogen auf ihr Gesamtgewicht, an Polyamid-Epichlorhydrin-Harz.

Als Kunststoffträger dienen solche aus Polyvinylchlorid, Polycarbonat, Polystyrol, Polysulfon, Polyolefin oder aus Polyester bzw. Celluloseester. Wegen der hervorragenden Dimensionsstabilität, die von besonderer Wichtigkeit ist, werden vorzugsweise Folien auf Basis Polyester, wie etwa Polyethylenterephthalat, eingesetzt.

Als Haftschichten dienen bekannte Mischungen, die zum Beispiel in der DE-PS-1 228 414, entsprechend GB-PS-1 061 784, beschrieben sind und aus einem Gemisch der wäßrigen Lösung einer Halogencarbonsäure, feinst verteiltem Siliziumdioxid und Netzmittel bestehen oder auch aus Mischungen nach DE-AS-1 694 534, entsprechend GB-PS-1 209 992. Weiterhin können substrierte Folien nach DE-AS-1 629 480, entsprechend GB-PS-1 127 076, und nach DE-AS-2 034 407, entsprechend GB-PS-1 264 338, verwendet werden.

Die Pigmentlackschichten können als filmbildendes Material eine Celluloseverbindung enthalten, z. B. Celluloseacetat, Cellulosenitrat, Celluloseacetatbutyrat oder Celluloseacetatpropionat, entweder allein oder in Mischung mit Polyvinylidenchlorid, Polyvinylchlorid, Polyvinylacetat, Polyurethan, Polystyrol, Polymethylmethacrylat, Polyethylmethacrylat, Polymethylacrylat, Polyethylacrylat, dem Mischpolymerisat aus Acrylnitril/ und Butadien/Styrol, Phenol-Formaldehyd, Harnstoff-Formaldehyd, Polyisocyanaten, Polyestern und Polycarbonaten.

Als Pigmentlackschicht ist auch eine solche verwendbar, wie sie z. B. aus DE-OS-2 417 879 hervorgeht, mit Polyvinylformal als polmere Verbindung und amorphem Siliziumdioxid und Titandioxid als Mattierungsmittel.

Die erfindungsgemäße Deckschicht trägt man nach einem der dafür üblichen Beschichtungsverfahren, wie zum Beispiel mit einer Rollrakel, durch Walzenantrag oder mit der Luftbürste auf. Als Lösungsmittel haben sich Mischungen aus Alkoholen und Wasser bewährt. Der Alkoholgehalt richtet sich dabei nach der Löslichkeit der Rohstoffe, dem gewünschten Benetzungsverhalten auf der zu beschichtenden Oberfläche und der Haftfähigkeit des Untergrundes.

Die erfindungsgemäß aufgebauten Deckschichten können auch geeignete Zusätze enthalten wie Füllstoffe, Farbstoffe, Pigmente und der Vernetzung dienende Mittel, wie z. B. in den eingesetzten Lösungsmitteln lösliche Verbindungen von Metallen der IV. Haupt- und Nebengruppe des Periodensystems.

Das erfindungsgemäße Zeichenmaterial kann auch als Lichtpausfolie eingesetzt werden, wenn man auf einer Oberfläche, zum Beispiel rückseitig, eine lichtempfindliche, insbesondere Diazochemikalien enthaltende Schicht, zum Beispiel eine Zweikomponenten-Diazotypieschicht aus Diazoniumsalz und Kupplungskomponente, Stabilisator usw. aufbringt.

Die folgenden Beispiele sollen die Erfindung näher erläutern.

**Beispiel 1**

Als Kunststoffträger diente eine 75 m dicke Folie aus Polyethylenterephthalat, die auf beiden Seiten eine Haftschicht aus Vinylidenchlorid-Mischpolymerisat besaß, wie sie zum Beispiel aus DE-AS-1 629 480 (entsprechend DB-PS-1 127 076) bekannt geworden ist. Weiterhin war auf der Haftschicht eine etwa 10 m dicke Pigmentlackschicht aus Celluloseacetopropionat mit feinteiliger Kieselsäure und Aluminiumsilikat als Mattierungsmittel aufgebracht. Auf diese Pigmentlackschicht wurden aus 2,5 gewichtsprozentigen Lösungen in gleichen Teilen Wasser und Isopropanol Deckschichten aus handelsüblichen Oberflächenleimungsmitteln aufgetragen und getrocknet. Sie hatten ein Trockengewicht zwischen 100 und 300 mg/m.

Nach einer Konditionierung von 24 Stunden bei 50 relativer Feuchtigkeit und 23° C wurde von den Schichten der Oberfächenwiderstand mit einer Federzungenelektrode (Anordnung A) nach DIN 53482 bzw. VDE 0303 Teil 3 und 100 V Meßspannung gemessen. Mit den verschiedenen Oberflächenleimungsmitteln wurden folgende Ergebnisse erhalten:

| Chemische Zusammensetzung des Leimungs- bzw. Naßverfestigungsmittels | Oberflächenwiderstand |
|---|---|
| a) Salz einer Polyacrylsäure, anionaktiv, 26 %-ig, gelöst in Wasser/Isopropanol mit pH-Wert 10 | $1,9 \times 10^{13}$ |
| b) Mischpolymerisat aus Styrol und Acrylat, kationische Dispersion, 18 %-ig, in Wasser, pH-Wert (1 %-ig) ca. 3 | $2,7 \times 10^{13}$ |
| c) Mischpolymerisat aus Styrol und Acrylat, anionaktiv, Konzentration 15 %-ig, pH-Wert ca. 10 | $10^{14}$ |
| d) Modifiziertes Polyamid-Harz kationaktive 14 %-ige Lösung in Wasser, pH-Wert ca. 4,5 | $6,5 \times 10^{9}$ |
| e) Mischpolymerisat mit Maleinsäureanhydrid, anionaktive Dispersion in Wasser, pH-Wert ca. 10 | $3,4 \times 10^{13}$ |
| f) Mischpolymerisat mit Maleinsäureanhydrid, kationaktive Dispersion, 25 %-ig mit pH-Wert 4,5 bis 5,5 | $10^{14}$ |

Aus dem Ergebnis ist ersichtlich, daß aus der Reihe der handelsüblichen Leimungs- bzw. Verfestigungsmittel nur das kationaktive, mit Epichlorhydrin modifizierte Polyamid-Harz d) antistatische Wirkung verleiht.

**Beispiel 2**

Auf einem wie in Beispiel 1 beschriebenen Kunststoffträger mit Haft- und Pigmentlackschichten wurden Deckschichten aufgebracht aus 2,5 gewichtsprozentigen Lösungen in gleichen Teilen Wasser und Isopropanol, deren Feststoff aus einem Mischpolymerisat von 95 % Vinylacetat mit 5 % Crotonsäure als Ammoniumsalz bestand (Lösung A).

Den Lösungen wurden die in der Tabelle angegebenen Mengen an mit Epichlorhydrin modifiziertem kationaktivem Polyamid-Harz in 2,5-gewichtsprozentiger Lösung zugefügt, das in Beispiel 1 als 14 %-ige Lösung in Wasser mit einem pH-Wert von ca. 4,5 angeführt ist.

Geprüft wurde die Einhaltung der Linienbreite an Strichen, die mit Zeichentusche TT von Rotring und einem Röhrchenfüller für 1,4 mm breite Linien auf der Oberfläche gezogen worden waren. Nach Trocknung der Tusche wurde die Linienbreite bei 44-facher Vergrößerung an mehreren Stellen in Millimetern ausgemessen und ein Mittelwert gebildet. Der theoretische Wert für eine genaue Einhaltung der Linienbreite liegt bei 6,2 cm.

Weiterhin wurden die Tuschehaftung nach 24-stündiger Trocknung mit einem farblosen Klebeband (TESA 104), das Netzen der Tusche TT durch Betrachten mit einer Lupe der angetrockneten Linien und der Oberflächenwiderstand nach der in Beispiel 1 beschriebenen Methode geprüft. Als Nullprobe diente das mit Lösung A erzeugte Zeichenmaterial.

| Probe | Anteil modifiziertes Polyamid (%) | Tusche-Haftung | Tusche-Netzung | Linien-breite | Oberflächen-widerstand |
|---|---|---|---|---|---|
| A | 0 | gut | gut | 6,6 | $7 \times 10^{13}$ |
| B | 10 | gut | gut | 6,5 | $10^{13}$ |
| C | 20 | gut | gut | 6,4 | $10^{12}$ |
| D | 30 | gut | gut | 6,3 | $9,5 \times 10^{10}$ |
| E | 40 | noch gut | gut | 6,2 | $3,6 \times 10^{10}$ |
| F | 50 | noch gut | gut | 6,1 | $3,6 \times 10^{10}$ |
| G | 100 | schlecht | noch gut | 6,4 | $8 \times 10^9$ |

Aus den Ergebnissen der Tabelle geht hervor, daß die günstigste Kombination bei einem Anteil von 30 bis 40 % Anteil von Polyamid-Epichlorhydrin-Harz liegt.

**Beispiel 3**

Es wurde ein Zeichenmaterial nach Beispiel 2, Probe D, mit einer Zeichenfolie verglichen, die auf einer mit Haftschicht versehen, 75 m dicken Polyesterfolie eine Pigmentlackschicht aus Celluloseacetopropionat mit feinteiliger Kieselsäure und Aluminiumsilikat als Mattierungsmittel trägt und eine Deckschicht aus einer Mischung eines Copolymerisats des Vinylacetats (95 %) und Crotonsäure (5 %) mit einem Acryl- bzw. Methacrylsäureestermischpolymerisat und dem Acetal des Polyvinylalkohols mit Butyraldehydsulfonsäure (Natriumsalz) als Antistatikum in Gewichtsverhältnissen von 70 20 10 enthält (deutsche Patentschrift DE-PS-3 207 122). Dazu wurden die Deckschichten auf einer Maschine mit Luftbürstenantrag dosiert und bei Temperaturen von etwa 120 °C getrocknet. Hinsichtlich der Beschreibbarkeit und der antistatischen Ausrüstung waren beide Folien etwa gleich gut. Probe D von Beispiel 2 zog im Gegensatz zu dem Vergleichsmaterial nach Reiben mit einem Tuch keine Zigarettenasche an.

Nach Einwirkung von Wasser stieg der Oberflächenwiderstand der Probe D von $10^{10}$ auf $10^{11}$ an, bei dem Vergleichsmaterial aber von $10^{10}$ auf $10^{13}$.

**Beispiel 4**

Ein Kunststoffträger mit Haftschicht und Pigmentlackschicht, wie im Beispiel 1 beschrieben, wurde mit Deckschichten von 0,3 g/m Trockengewicht versehen.

Die aufgebrachten Lösungen enthielten als Feststoff ein Mischpolymerisat aus Vinylacetat und 5 % Crotonsäure als Ammoniumsalz und ein Leimungsmittel für Papier aus mit Epichlorhydrin modifiziertem Polyamid-Harz in einem Gewichtsverhältnis von 1:1. Die Feststoffkonzentration betrug 2,5 %, und als Lösungsmittel wurde eine Mischung aus gleichen Gewichtsteilen Isopropanol und Wasser verwendet.

In der folgenden Tabelle sind die dabei verwendeten Leimungsmittel für Papier charakterisiert. Bei den Produkten mit der Kurzbezeichnung A, B und D handelt es sich um in Wasser gelöste, mit Epichlorhydrin modifizierte Polyamide aus $C_3$ bis $C_{10}$-Dicarbonsäuren.

Bei dem Produkt C handelt es sich um ein in Wasser gelöstes, mit Epichlorhydrin modifiziertes Polyamid aus Dicarbonsäuren mit Kettenlängen von mehr als 10 C-Atomen.

**Tabelle**

| Kurzbezeichnung | A | B | C | D |
|---|---|---|---|---|
| Konzentration (%) | 20 | 10 | 14 | 12,5 |
| Viskosität bei 20°C(mPa.s) | 35 - 70 | 10 - 14 | 5 - 15 | ca. 15 |
| pH-Wert | 2,5 - 3 | 4 - 4,5 | ca. 4,5 | 5 |
| Spez.Gewicht +) (g/cm³) | 1,056-1,062 | 1,022-1,024 | 1,02 | 1,034 |

+) Die spezifischen Gewichte waren bei 20°C gemessen worden.

An den Deckschichten wurden die schon in den vorangegangenen Beispielen beschriebenen Prüfungen ausgeführt. Als Nullprobe wurde eine Deckschicht nur aus dem Mischpolymerisat von Vinylacetat und Crotonsäure verwendet. In der folgenden Tabelle mit den Prüfergebnissen ist diese Probe mit 0 bezeichnet.

| Probe | 0 | A | B | C | D |
|---|---|---|---|---|---|
| Oberflächenwiderstand ($\Omega$) | $10^{14}$ | $3,0 \cdot 10^{10}$ | $3,5 \cdot 10^{10}$ | $3,6 \cdot 10^{10}$ | $1,4 \cdot 10^{12}$ |
| Tuschestrichbreite (cm) | 6,8 | 6,5 | 6,5 | 6,1 | 6,3 |
| Tuschenetzung | gut | gut | gut | gut | gut |
| Tuschehaftung | gut | gut | noch gut | noch gut | gut |

**Beispiel 5**

Als Kunststoffträger diente eine 125 µm dicke Folie aus Polyethylenterephthalat, die auf einer Seite mit einer Haftschicht nach der DE-AS-1 629 480 versehen war. Es wurde folgende Lösung mit einer Rakel in 6 µm Dicke aufgetragen und bei 110°C in einem Trockenschrank mit Luftumwälzung getrocknet:

| | |
|---|---|
| 32 g | Mischpolymerisat aus 95 % Vinylacetat und 5 % Crotonsäure als Ammoniumsalz, 50 %-ig |
| 94 g | Methanol |
| 376 g | Aceton, |

dazu kam eine Lösung aus

| | |
|---|---|
| 49 g | Harz C von Beispiel 4, 14 %-ig, in Wasser. |
| 450 g | Weichwasser. |

Die klare Lösung hatte einen pH-Wert von 5,8. Es entstand ein dünner Film mit einem Oberflächenwiderstand von $3,8 \cdot 10^{11} \Omega$. die Linienbreite der Tuschestriche wurde sehr gut eingehalten, die Randschärfe der Linien, die Benetzung und die Tuschehaftung waren ausgezeichnet.

**Patentansprüche**

1. Zeichenmaterial aus einem Kunststoffträger, der wenigstens auf einer Oberfläche mit einer Haftschicht, einer Pigmentlack- oder Klarlackschicht und mit einer antistatisch ausgerüsteten Deckschicht versehen ist, die ein Copolymerisat mit mindestens 90 Gewichtsprozent Vinylacetat enthält und als Antriebstatikum ein Polyamid-Epihalogenhydrin-Harz enthält.

2. Zeichenmaterial nach Anspruch 1, dadurch gekennzeichnet, daß die Deckschicht ein Polyamid-Epichlorhydrin-Harz aus einem Kondensationsprodukt aus mindestens einer langkettigen, aliphatischen, gesättigten Dicarbonsäure und mindestens einem Polyamin, das anschließend mit Epichlorhydrin modifiziert wurde, enthält.

3. Zeichenmaterial nach Anspruch 1 und 2, dadurch gekennzeichnet, daß die Deckschicht ein Polyamid-Epichlorhydrin-Harz enthält, das aus einem Kondensationsprodukt aus einer Dicarbonsäure mit mindestens 10 Kohlenstoffatomen und Alkylendi- bzw. -triamin erhalten wurde.

4. Zeichenmaterial nach Ansprüchen 1 bis 3, dadurch gekennzeichnet, daß die Deckschicht als Polyamid-Epichlorhydrin-Harz ein Kondensationsprodukt aus einer polymeren Carbonsäure mit mindestens 18 Kohlenstoffatomen und einem Polyamin enthält.

5. Zeichenmaterial nach Ansprüchen 1 bis 4, dadurch gekennzeichnet, daß die Deckschicht 30 bis 40 Gewichtsprozent, bezogen auf ihr Gesamtgewicht, an Polyamid-Epichlorhydrin-Harz enthält.

6. Zeichenmaterial nach Ansprüchen 1 bis 5, dadurch gekennzeichnet, daß es rückseitig mit einer lichtempfindlichen Schicht versehen ist.

7. Zeichenmaterial nach Anspruch 6, dadurch gekennzeichnet, daß als lichtempfindliche Schicht eine Zweikomponenten-Diazotypieschicht vorhanden ist.

**Claims**

l. Drafting material comprising a plastic support which carries on at least one surface an adhesive layer, a layer of pigmented or clear lacquer and an antistatically equipped top layer which contains a copolymer comprising at least 90 % by weight of vinyl acetate and a polyamide-epihalogenohydrin resin as the antistatic agent.

2. Drafting material as claimed in Claim 1, wherein the top layer contains a polyamide-epichlorohydrin resin obtained from a condensation product of at least one long-chain alipahtic, saturated dicarboxylic acid and at least one polyamine, which has been subsequently modified with epicholorohydrin.

3. Drafting material as claimed in Claims 1 and 2, wherein the top layer contains a polyamide-epichlorohydrin resin obtained from a condensation product of a dicarboxylic acid with at least to carbon atoms and alkylene diamine or alkylene triamine.

4. Drafting material as claimed in Claims 1 to 3, wherein the top layer contains as the polyamide-epichlorohydrin resin, a condensation product of a polymeric carboxylic acid having at least 18 carbon atoms and a polyamine.

5. Drafting material as claimed in Claims 1 to 4, wherein the top layer contains 30 to 40 percent by weight of polyamide-epichlorohydrin resin, relative to the total weight of the top layer.

6. Drafting material as claimed in Claims 1 to 5, the reverse surface of which is provided with a light-sensitive layer.

7. Drafting material as claimed in Claim 6, wherein the light-sensitive layer is a two-component diazotype layer.

**Revendications**

1. Matériau à dessin constitué d'un support en matière plastique qui est muni, au moins sur une face, d'une couche adhésive, d'une couche de vernis pigmenté ou de vernis transparent et d'une couche de recouvrement à apprêt antistatique qui contient un copolymère comportant au moins 90 % en poids d'acétate de vinyle et, en tant qu'agent antistatique, une résine polyamide-épihalohydrine.

2. Matériau à dessin selon la revendication 1, caractérisé en ce que la couche de recouvrement contient une résine polyamide-épichlorhydrine constituée d'un produit de condensation d'au moins un acide dicarboxylique aliphatique saturé à longue chaîne et d'au moins une polyamine, qui a ensuite été modifié avec de l'épichlorhydrine.

3. Matériau à dessin selon la revendication 1 ou 2, caractérisé en ce que la couche de recouvrement contient une résine polyamide-épichlorhydrine qui a été obtenue à partir d'un produit de condensation d'un acide dicarboxylique ayant au moins 10 atomes de carbone, et d'alkylènedi- ou triamine.

4. Matériau à dessin selon les revendications 1 à 3, caractérisé en ce que la couche de recouvrement contient, en tant que résine polyamide-épichlorhydrine, un produit de condensation d'un acide carboxylique polymère ayant au moins 18 atomes de carbone et d'une polyamine.

5. Matériau à dessin selon les revendications 1 à 4, caractérisé en ce que la couche de recouvrement contient de 30 à 40 en poids, par rapport à son poids total, de résine polyamide-épichlorhydrine.

6. Matériau à dessin selon les revendications 1 à 5, caractérisé en ce qu'il est muni au verso d'une couche photosensible.

7. Matériau à dessin selon la revendication 6, caractérisé en ce que, en tant que couche photosensible, est présente une couche pour diazotypie à deux composants.